# EUROPEAN PATENT APPLICATION

(11) **EP 1 892 836 A1**
(43) Date of publication of application: **27.02.2008**
(21) Application number: 06291364.5
(22) Date of filing: 24.08.2006
(51) Int. Cl.: H03K 19/177, G06F 15/78

(54) **Method for re-programming an FPGA for use in a transmission line element**

(71) Applicant: Alcatel Lucent, 75008 Paris (FR)
(72) Inventor: Huck, Martin, 71672 Marbach a. N. (DE)
(74) Representative: Kohler Schmid Möbus

(57) **Abstract**

A method for re-programming an FPGA (2), particularly in a transmission line element (1), said FPGA executing an FPGA core (5) for processing signals, in particular signals (PL) transported on a transmission line (4, 4'). The proposed method comprises the steps of:
- stopping the FPGA core (5);
- saving a configuration (6) of the FPGA core (5) to an external memory (9, 10);
- stopping the complete FPGA (2);
- re-programming the FPGA (2) with a new FPGA code;
- re-starting the FPGA (2) except the FPGA core (5);
- re-loading said configuration (6) from the external memory (9, 10);
- starting the FPGA core (5).

In this way, a duration of service interruption can be considerably reduced.

## Description

The present invention relates to a method for re-programming an, said FPGA executing an FPGA core for processing signals, in particular signals transported on a transmission line. The present invention also relates to a computer program product for execution by a control unit for use in re-programming an FPGA, said FPGA executing an FPGA core for processing signals, in particular signals transported on a transmission line, in particular for In-Service Upgrade.

Furthermore, the present invention relates to an FPGA for use in a transmission line element as well as to such a transmission line element.

A Field Programmable Gate Array (FPGA) is a semi-conductor device comprising programmable logic components and programmable interconnects. Said programmable logic component can be programmed to duplicate the functionality of basic logic gates, such as AND, OR, XOR, NOT, or more complex combinatorial functions, such as decoders or simple math functions.

A hierarchy of programmable interconnects allows the logic blocks of an FPGA to be interconnected as needed by a system designer, similar to a one-chip programmable breadboard. The logic blocks of an interconnect of an FPGA can be programmed after the manufacturing process by the system designer (hence the name "Field Programmable").

While FPGAs are generally slower than their Application-Specific Integrated Circuit (ASIC) counterparts they have several advantages and are therefore increasingly used in transmission devices, in particular but not limited to transmission devices used in optical transmission systems. Among these advantages are a higher flexibility for bug fixing and maintenance, faster development in comparison to ASICs, a reduced financial risk compared to ASIC development, and incremental feature development.

The high performance of contemporary FPGAs allows to insert them directly into a transmission line. However, as a consequence to this, required In-Service Upgrades (ISU), which are performed during actual operation of an FPGA, may cause severe service interruptions of the order of several seconds, e. g. 30 and more seconds. This is a major disadvantage when using FPGAs in (optical) transmission systems.

In the prior art, transmission line FPGAs comprise an FPGA core which processes payload signals on the transmission line. The core logic is configured by a microprocessor in operable connection with the FPGA. The configuration process is rather slow because of limited bus bandwidth and software-based processing between the microprocessor and the FPGA.

During ISU, the FPGA is stopped, new FPGA code is loaded and then re-started and re-configured with the microprocessor. As stated above, this may cause a service interruption of more than 30 seconds, mainly due to the slow nature of software-controlled re-configuration.

### Object of the invention

It is the object of the present invention to provide a method for re-programming an FPGA, in particular for use in connection with a transmission line, which considerably reduces the duration of service interruption. It is also an object of the present invention to provide a computer program product as well as an FPGA and a transmission line element for translating said method into practice.

### Summary of the invention

According to a first aspect of the present invention the object is achieved by providing a method for re-programming an FPGA, said FPGA executing an FPGA core for processing signals, in particular signals transported on a transmission line, comprising the steps of stopping the FPGA core, saving a configuration of the FPGA core to an external memory, stopping the complete FPGA, re-programming the FPGA with a new FPGA code, re-starting the FPGA except the FPGA core, re-loading said configuration from the external memory, and starting the FPGA core.

According to a second aspect of the present invention the object is also achieved by providing a computer program product for execution by a control unit for use in re-programming an FPGA, said FPGA executing an FPGA core for processing signals, in particular signals transported on a transmission line, in particular for In-Service Upgrade, comprising program code sequences operable to:
- stop the FPGA core;
- command saving a configuration of the FPGA core to an external memory;
- stop the FPGA;
- provide the FPGA with a new FPGA code;
- re-start the FPGA except the FPGA core;
- start the FPGA core after re-loading said configuration from the external memory by the new FPGA code.

In this context, said step of providing the FPGA with a new FPGA code may comprise storing the new FPGA code in a Flash memory and then re-programming the FPGA directly by means of the Flash memory. In this way, storing the new FPGA code on said Flash memory can be achieved by means of the above-defined computer program without any particular timing constraints. Once the new FPGA code has been correctly written to the Flash memory, fast re-programming of the FPGA can be achieved.

According to a third aspect of the present invention, the object is achieved by providing an FPGA for use in a transmission line element, said FPGA executing an FPGA core for processing signals transported on a transmission line, said FPGA being re-programmable in accordance with the method in accordance with said first aspect of the present invention, in particular by means of the computer program product in accordance with said second aspect of the present invention.

According to a fourth aspect of the present invention, the object is achieved by providing a transmission line element comprising the FPGA according to said third aspect of the present invention in operable connection with a control unit for controlling the FPGA in accordance with said method according to said first aspect of the present invention.

Thus, as a basic idea underlying the present invention, software-controlled re-configuration of the FPGA is at least partly replaced by hardware-controlled saving and re-loading of configuration data using an external memory.

In another embodiment of the method in accordance with the present invention, a dedicated external memory is used for saving said configuration. Said external memory preferably is devised in the form of an external RAM (External Random Access Memory - EXTRAM).

Alternatively, an external memory already present in operable connection with the FPGA, e. g. for payload buffering or temporary data storage, can be used for saving said configuration.

In a further embodiment of the method in accordance with the present invention, the external memory is non-volatile at least while the FPGA is stopped. In this way, every type of memory capable of storing said configuration for the (reduced) duration of the re-programming process can be employed in the context of the present invention.

In yet another embodiment of the present invention the latter further comprises the step of checking a configuration of the external memory prior to re-loading the configuration. However, checking the EXTRAM configuration is used for informational reasons only, since even an erroneous configuration might only have a small traffic impact. Afterwards, the correct configuration may be rewritten in the FPGA by means of suitable software means of the control unit.

In order to determine whether or not an ISU has been initiated, in another embodiment of the invention the FPGA checks the EXTRAM for a valid configuration. This can be achieved, for instance, by means of a "magic number" which is written to a specified memory cell of the EXTRAM when saving the FPGA configuration.

Since a register map used in the FPGA may have changed in comparison to the new FPGA, preferably the saved configuration is translated by the new FPGA code in case a register map has changed.

In further embodiments of the method in accordance with the present invention, said steps of saving the configuration of the FPGA and of re-loading the saved configuration from the external memory can be performed autonomously by the FPGA, i. e. without relying on any external control function.

In a variant of the method in accordance with the present invention, which is optimised with respect to time, the following steps are performed in sequence:
- writing new FPGA code to the Flash memory by means of suitable program code sequences executed on the control unit;
- commanding upgrading the FPGA by means of the control unit;
- stopping the FPGA core by means of the FPGA;
- saving the FPGA configuration by means of the FPGA;
- completely stopping the FPGA, thus providing an interrupt to the control unit;
- initiating loading of new FPGA code by means of the control unit;
- automatically starting the FPGA except the FPGA core;
- checking by means of the FPGA if a valid configuration is present in memory;
- optionally loading said valid configuration by means of the FPGA;
- starting the FPGA core by means of the FPGA.

The method in accordance with the present invention is well suited for any type of application requiring high availability of the FPGA.

Further advantages and characteristics of the present invention can be gathered from the following description of embodiments given by way of example only with reference to the enclosed drawings. Features described above as well as below can be used in accordance with the present invention either individually or in conjunction. The described embodiments are not be regarded as an exhaustive enumeration but rather as particular examples for translating the present invention into practice.

### Brief description of the drawings

Fig. 1 is a schematic block diagram of an embodiment of the present invention, and
Fig. 2 is a flow chart for illustrating an embodiment of the method in accordance with the present invention.

### Detailed description

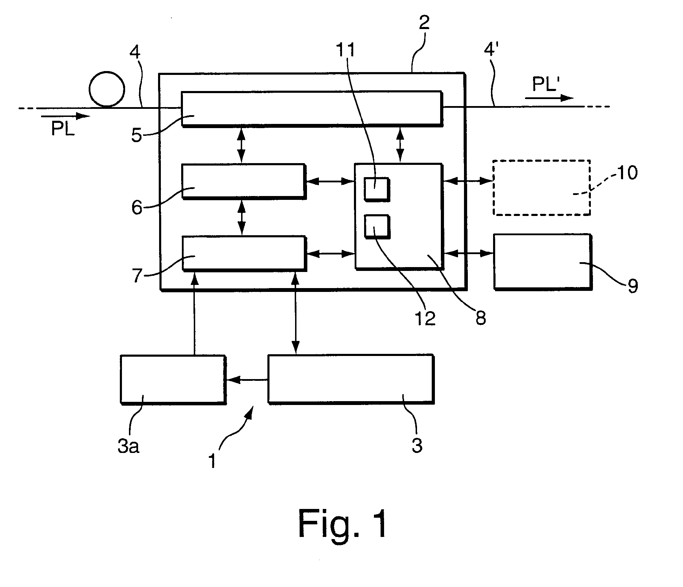

**Fig. 1** is a schematic block diagram of an embodiment of the present invention in the form of a transmission line element **1** comprising a Field Programmable Gate Array (FPGA) **2** in operable connection with a microprocessor **3** for controlling the FPGA 2, in particular during re-programming of the latter, and with a Flash memory **3a.** FPGA 2 is connected with a transmission line **4, 4'** for transmitting payload signals **PL** and **PL',** respectively, e. g. monitoring signals, manipulation signals or the like.

Alongside not explicitly shown programmable logic components and interconnects, as generally known, FPGA 2 further comprises core logic **5** (hereinafter also referred to as FPGA core), core configuration data **6,** microprocessor interface controller **7** and optional RAM control **8.** RAM control 8 is operably connected with external RAM (EXTRAM) **9** and - optionally - with further (dedicated) EXTRAM **10.**

RAM control 8 further comprises configuration checking means **11** and configuration translating means **12,** preferably also realized in software form, the function of which will become apparent later.

FPGA core 5 implements functions for processing signals transmitted on transmission line 4, 4'. In this way, payload signals PL enter FPGA 2/FPGA core 5 via so-called line-side transmission line 4, are processed by the FPGA core 5, and leave FPGA 2 via so-called system-side transmission line 4 as processed payload signals PL'. If at least one of said transmission lines 4, 4' is devised as an optical signal transmission line, then suitable optical-to-electrical and/or electrical-to-optical converters (not shown) must be provided, as known to a person skilled in the art.

The core logic 5 is configured under control of microprocessor 3 functioning as a control unit via interface controller 7. The corresponding configuration process is slow due to limited bus bandwidth between microprocessor / control unit 3 and FPGA 2 and the software processing involved.

Configuration data for the FPGA core 5 is suitably stored at 6 in volatile or non-volatile fashion.

Furthermore, the FPGA core 5 uses EXTRAM 9 with high bandwidth (pure hardware process) as an additional memory for buffering payload data, temporary data, or the like. Access to said data is provided through RAM control 8.

As already stated above, FPGA core 5 processes the signal payload. Thus, when the core is not available no payload transport is possible. Therefore, core downtimes, in particular due to FPGA re-programming, should be limited.

In order to achieve this object, in accordance with the present invention FPGA core 5 is stopped first, thus interrupting a current payload transmission service through transmission line 4, 4'. FPGA 2 then autonomously copies the configuration data 6 into EXTRAM 9. In a preferred embodiment of the present invention, optional dedicated EXTRAM 10 is used for this purpose.

Subsequently, FPGA 2 is stopped as such. Then new FPGA code for re-programming FPGA 2 is loaded under control of microprocessor / control unit 3 fromFlash memory 3a, and FPGA 2 is re-started with the exception of FPGA core 5, based on said new FPGA code.

In the following the new FPGA 2 based on said new FPGA code is also referred to as FPGA'.

Then FPGA' autonomously re-loads the previously saved configuration data 6 from EXTRAM 9 (or EXTRAM 10).

Generally, FPGA core 5 is re-started immediately based on said re-loaded configuration data, which results in a shortened service interruption owing to the higher bandwidth of EXTRAM 9, 10 compared with said limited bandwidth for configuration changes between microprocessor 3 and FPGA 2, as employed in the prior art.

Preferably, prior to re-loading the configuration data, the latter (i. e., configuration of external memory 9, 10) are checked by configuration checking means 11 for to determine whether or not said configuration data have been corrupted during the saving process. To this end, configuration checking means 11 can be devised as CRC (Cyclic Redundancy Check) checking means or the like. However, CRC checking of EXTRAM 9, 10 preferably is limited to informational reasons: even in case of a slightly corrupted configuration, configuration re-loading should be performed since generally only a small traffic impact (i. e. impact on payload signals) is to be expected. Subsequently, the correct configuration can be rewritten based on (slower) software functionality (provided, e. g., by configuration translating means 12).

Furthermore, if the configuration data are not (fully) compatible with the new FPGA code, the latter has to translate the (saved) configuration of the old FPGA to correspond with the new register map. In the embodiment of Fig. 1 this functioning is provided by configuration translating means 12.

In this way, in accordance with the present invention, the process of FPGA re-programming is at least partly devised in the form a purely hardware-based configuration data saving and re-loading process, such that process duration is shortened with respect to purely software-based prior art processes.

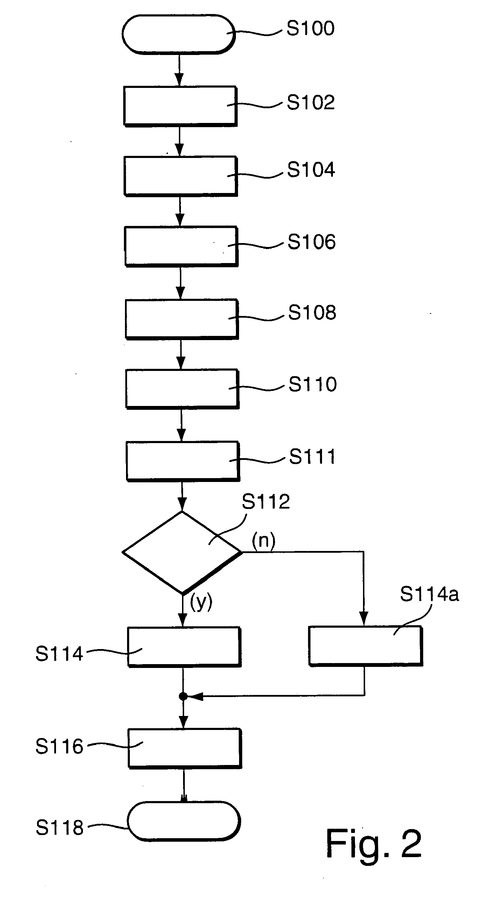

**Fig. 2** is a flow chart of an embodiment of the method in accordance with the present invention.

The method starts with step **S100.**

For FPGA re-programming, in particular during In-Service Upgrade (ISU), in subsequent step **S102** the FPGA core is stopped, thus interrupting an ongoing service.

Then, in step **S104,** the FPGA autonomously copies its present configuration (configuration data) into an at least temporarily non-volatile external memory, e. g. an EXTRAM, which may be dedicated for this purpose.

In subsequent step **S106,** the entire FPGA is stopped, and in step **S108** new FPGA code is loaded, thus re-programming the FPGA.

In subsequent step **S110,** the FPGA is re-started with the exception of the FPGA core.

Then, in step **S111** for informational purposes a check is performed, e. g. by means of a CRC, as to whether or not the saved configuration is erroneous. However, the FPGA core may be started based on a "wrong" configuration since there might only be a small traffic impact.

In subsequent step **S112** it is checked whether or not a configuration-related content of the external memory (i. e. the saved configuration data) is compatible with a current register map based on the new FPGA code.

If the question in step S112 is answered in the affirmative (y), then in step **S114** the configuration data are autonomously re-loaded from the external memory.

Then, in step **S116** the FPGA core is re-started.

If the question in step S112 is answered in the negative (n), then in step **S114a** the configuration data are modified/rewritten in accordance with the changed register map. The method then continues with step S116, as previously described, using the translated configuration data.

The inventive method terminates with step **S118.**

It has been shown that by employing the above-described inventive approach, service interruptions due to FPGA re-programming can be reduced from durations of more than 30 seconds to approximately 500 ms, which is a factor of 60.

## Claims

1. A method for re-programming an FPGA (2), said FPGA executing an FPGA core (5) for processing signals, in particular signals (PL) transported on a transmission line (4, 4'), comprising the steps of:
- stopping the FPGA core (5);
- saving a configuration (6) of the FPGA core (5) to an external memory (9, 10);
- stopping the complete FPGA (2);
- re-programming the FPGA (2) with a new FPGA code;
- re-starting the FPGA (2) except the FPGA core (5);
- re-loading said configuration (6) from the external memory (9, 10);
- starting the FPGA core (5).

2. The method of claim 1, **characterized by** using a dedicated external memory (10) for saving said configuration (6).

3. The method of claim 1, **characterized in that** the external memory (9, 10) is non-volatile at least while the FPGA (2) is stopped.

4. The method of claim 1, **characterized by** the step of translating, by the new FPGA code, the saved configuration (6) in case of a changed register map.

5. The method of claim 1, **characterized by** the step of checking a configuration of the external memory (9, 10) prior to re-loading the saved configuration (6).

6. The method of claim 1, **characterized in that** the step of saving said configuration (6) is performed autonomously by the FPGA (2).

7. The method of claim 1, **characterized in that** the step of re-loading said configuration (6) is performed autonomously by the new FPGA (2).

8. A computer program product for execution by a control unit (3) for use in re-programming an FPGA (2), said FPGA (2) executing an FPGA core (5) for processing signals, in particular signals transported on a transmission line (4, 4'), in particular for In-Service Upgrade, comprising program code sequences operable to:
- stop the FPGA core (5);
- command saving a configuration (6) of the FPGA core (5) to an external memory (9, 10);
- stop the FPGA (2);
- provide the FPGA (2) with a new FPGA code;
- re-start the FPGA (2) except the FPGA core (5);
- ;start the FPGA core (5) after re-loading said configuration (6) from the external memory (9, 10) by the new FPGA code.

9. Field Programmable Gate Array (FPGA) (2) for use in a transmission line element (1), said FPGA executing an FPGA core (5) for processing signals (PL) transported on a transmission line (4, 4'), said FPGA (2) being re-programmable in accordance with the method of claim 1, in particular by means of the computer program product of claim 8.

10. Transmission line element (1), comprising the FPGA (2) of claim 9 in operable connection with a control unit (3) for controlling the FPGA (2) in accordance with claim 1.

## Amended claims

### Amended claims in accordance with Rule 137(2) EPC.

**1.** A method for re-programming an FPGA (2), said FPGA executing an FPGA core (5) having a configuration (6) which implements logical functions for processing signals, comprising the steps of:
- stopping the FPGA core (5);
- stopping the complete FPGA (2);
- re-programming the FPGA (2) with a new FPGA code;
- re-starting the FPGA (2) except the FPGA core (5);
- starting the FPGA core (5);
**characterized by** the steps of:
- prior to stopping the FPGA core (5), saving the configuration (6) of the FPGA core (5) to an external memory (9, 10); and
- prior to starting the FPGA core (5), re-loading said configuration (6) from the external memory (9, 10).

**2.** The method of claim 1, **characterized by** using a dedicated external memory (10) for saving said configuration (6).

**3.** The method of claim 1, **characterized in that** the external memory (9, 10) is nonvolatile at least while the FPGA (2) is stopped.

**4.** The method of claim 1, **characterized by** the step of translating, by the new FPGA code, the saved configuration (6) in case of a changed register map.

**5.** The method of claim 1, **characterized by** the step of checking a configuration of the external memory (9, 10) prior to re-ioading the saved configuration (6).

**6.** The method of claim 1, **characterized in that** the step of saving said configuration (6) is performed autonomously by the FPGA (2).

**7.** The method of claim 1, **characterized in that** the step of re-loading said configuration (6) is performed autonomously by the new FPGA (2).

**8.** A computer program product for execution by a control unit (3) for use in re-programming an FPGA (2), said FPGA (2) executing an FPGA core (5) having a configuration (6) which implements logical functions for processing signals, said computer program product comprising program code sequences operable to:
- stop the FPGA core (5);
- stop the FPGA (2);
- provide the FPGA (2) with a new FPGA code;
- re-start the FPGA (2) except the FPGA core (5);
- start the FPGA core (5) by the new FPGA code;
**characterized by** program code sequences operable to:
- command saving the configuration (6) of the FPGA core (5) to an external memory (9, 10) prior to stopping the FPGA (2); and
- re-loading said configuration (6) from the external memory (9, 10) prior to starting the FPGA core (5).

**9.** Field Programmable Gate Array (FPGA) (2) for use in a transmission line element (1), said FPGA executing an FPGA core (5) for processing signals (PL) transported on a transmission line (4, 4'), said FPGA (2) being re-programmable in accordance with the method of claim 1, in particular by means of the computer program product of claim 8.

**10.** Transmission line element (1), comprising the FPGA (2) of claim 9 in operable connection with a control unit (3) for controlling the FPGA (2) in accordance with claim 1.
